(19) Europäisches Patentamt
European Patent Office
Office européen des brevets

(11) **EP 2 861 397 B1**

(12) **EUROPÄISCHE PATENTSCHRIFT**

(45) Veröffentlichungstag und Bekanntmachung des Hinweises auf die Patenterteilung:
**05.10.2016 Patentblatt 2016/40**

(21) Anmeldenummer: **13734654.0**

(22) Anmeldetag: **13.06.2013**

(51) Int Cl.:
**B29B 9/06** $^{(2006.01)}$

(86) Internationale Anmeldenummer:
**PCT/EP2013/001754**

(87) Internationale Veröffentlichungsnummer:
**WO 2013/185924 (19.12.2013 Gazette 2013/51)**

(54) **GRANULIERVORRICHTUNG**

GRANULATION DEVICE

DISPOSITIF DE GRANULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2012 DE 102012012062**

(43) Veröffentlichungstag der Anmeldung:
**22.04.2015 Patentblatt 2015/17**

(73) Patentinhaber: **Maag Automatik GmbH 63762 Großostheim (DE)**

(72) Erfinder: **MÜRB, Reinhardt-Karsten 63743 Aschaffenburg (DE)**

(74) Vertreter: **Spranger, Stephan Spranger + Burger Patentanwälte Widenmayerstrasse 28 80538 München (DE)**

(56) Entgegenhaltungen:
**WO-A1-03/031132    DE-A1- 10 344 793**
**DE-A1-102009 019 954    DE-U1-202005 020 467**
**US-A- 3 427 685    US-A- 4 019 414**
**US-A1- 2010 323 047**

**Beschreibung**

Die Erfindung betrifft eine Granuliervorrichtung zum Granulieren von thermoplastischem Kunststoffmaterial und/oder von pharmazeutischen Materialien.

Generell werden zur Granulierung von thermoplastischem Kunststoffmaterial, insbesondere Polymeren wie z. B. Polyethylen oder Polypropylen, oder auch von pharmazeutischen Materialien, häufig Granuliervorrichtungen eingesetzt, bei welchen extrudiertes, geschmolzenes Kunststoff- oder pharmazeutisches Material in einem Gießkopf zu Strängen geformt wird. Dies geschieht üblicher Weise dadurch, dass das heiße, sich in schmelzflüssigem Zustand befindende Material durch Düsen einer Düsenanordnung des Gießkopfs in ein Kühlfluid gepresst werden, beispielsweise Wasser oder Luft, das sich in einer Schneidkammer befindet. In der Schneidkammer befindet sich eine Messeranordnung mit Messern, welche die Öffnungen der Düsenplatte überstreichen und die Materialstränge trennen, so dass Granulatkörner gebildet werden.

Auf Seiten des Gießkopfes ist es dabei notwendig, dass die Schmelze führenden Teile möglichst heiß sind, um zu verhindern, dass die Schmelze vor der Strangformung durch die Düsen erstarrt.

Nach der Strangformung muss das Schmelzematerial in der Schneidkammer möglichst schnell durch Abkühlen zum Erstarren gebracht werden. Auf Seiten der Schneidkammer müssen daher die Gehäuseteile der Schneidkammer möglichst kalt sein, um zu verhindern, dass Granulen an diesen haften bleiben.

Daraus ergibt sich ein großer Temperaturunterschied zwischen den Teilen des Gießkopfs einerseits und dem Schneidkammergehäuse andererseits.

An den Stellen, an denen sich Teile des Gießkopfs und Teile des Schneidkammergehäuses berühren bzw. in Kontakt stehen, wird durch den hohen Temperaturgradienten, der sich aus dem großen Temperaturunterschied ergibt, ein entsprechend hoher Wärmefluss hervorgerufen, so dass aus dem heißen Gießkopf Wärme durch die Kontaktstelle in das Material des Schneidkammergehäuses wandert.

Um diesem unerwünschten Wärmefluss entgegenzuwirken, werden Isoliermaterialien verwendet, die in die Kontaktstellen eingesetzt sind und diese thermisch voneinander isolieren.

So ist zum Beispiel aus dem Dokument WO 03/031132 bekannt, einen Granulierkopf durch eine Isolierschicht von einem Granuliergehäuse zu trennen.

Das US Patent 4,019,414 beschreibt eine Vorrichtung zum Stranggranulieren, bei welcher eine Isolierung Teil des Gießkopfs ist, um den dortigen Gießkopfgrundkörper gegen die eigentliche Lochplatte zu isolieren. Eine Temperiereinrichtung ist axial von der Messerwelle her zur Zufuhr von Kühlfluid zum Schneidkammergehäuse vorgesehen.

Das Dokument DE 103 44 793 A1 beschreibt, dass in einer Granuliervorrichtung eine Wasserkammer mit einer Düsenplatte fest verbunden ist, wobei eine Dichtung zwischen der Wasserkammer und der Düsenplatte eingesetzt ist, welche die erhitzte Düsenplatte gegenüber der mit Kühlwasser gefüllten Wasserkammer isoliert.

Um den Wärmefluss so weit wie möglich zu minimieren, sollten idealer Weise Isoliermaterialien mit einer möglichst geringen Wärmeeindringzahl b verwendet werden, wobei die Wärmeeindringzahl b gegeben ist als die Quadratwurzel aus dem Produkt der Wärmeleitfähigkeit $\lambda$, der Dichte p und der spezifischen Wärmekapazität c des Materials:

$$b = \sqrt{\lambda \rho c}$$

Neben der Wärmeeindringzahl sind bei der Auswahl des Isoliermaterials weitere technische Anforderungen an das Material zu berücksichtigen, wie zum Beispiel Materialabdichtung, Produktverträglichkeit, Isoliereigenschaft und insbesondere mechanische Stabilität und Tragfähigkeit der Kontaktstelle. Diese verschiedenen Anforderungen können üblicher Weise nicht gleichzeitig optimal erfüllt werden, so dass die Auswahl des Isoliermaterials meist als ein Kompromiss dieser unterschiedlichen Anforderungen getroffen werden muss. Im Ergebnis führt dies meist dazu, dass ein Material für die Isolierung verwendet werden muss, welches die gewünscht niedrige Wärmeeindringzahl b nicht erreicht. Die Isolierwirkung ist dann nur teilweise gegeben und es verbleibt ein Rest an Wärmeeintrag.

Dieser verbleibende Wärmeeintrag in das Schneidkammergehäuse kann sich als störend und unerwünscht erweisen.

Dies betrifft insbesondere die Heißabschlaggranulierung mit Luft als Prozessfluid, was auch als Trockenheißabschlag, bezeichnet wird. Auf Grund der geringen Wärmekapazität des Prozessfluids Luft ist es oftmals nicht möglich, den oben genannten verbleibenden Wärmeeintrag so weit zu minimieren, dass die Gehäusetemperatur der Schneidkammer nicht über das zuträgliche Maß hinaus steigt. Es besteht daher die Gefahr, dass Granulen an Wandungen der Schneidkammer haften bleiben.

Der verbleibende Wärmefluss kann sich auch auf Seiten des Gießkopfs nachteilig auswirken, da der verbleibende Wärmefluss dazu führt, dass an den Kontaktstellen zwischen Gießkopf und Schneidkammer dem Gießkopf Wärme entzogen wird und dieser daher an der Kontaktstelle lokal auskühlt. Diese lokale Temperaturabnahme kann wiederum dazu führen, dass an anderen Stellen oder Elementen des Gießkopfs das gewünschte Temperaturprofil, insbesondere eine gewünschte einheitliche, stabile Temperatur, negativ beeinflusst wird und es zu unerwünschten Temperaturverläufen im Gießkopf kommt. Dies kann insbesondere bei der Unterwassergranulierung, auftreten, bei der das Prozessfluid Wasser auf Grund seiner hohen Wärmekapazität eine relativ hohe Abfuhr von Wärme erzeugt. Durch das Wasser wird ein in das Schneidkammergehäuse eintretender Wärmefluss effektiv abgeführt, was wiederum dazu führt, dass dem Gießkopf über die Kontaktstelle mehr Wärme entzogen wird und die oben genannte lokale Auskühlung des Gießkopfs an der Kontaktstelle verstärkt wird.

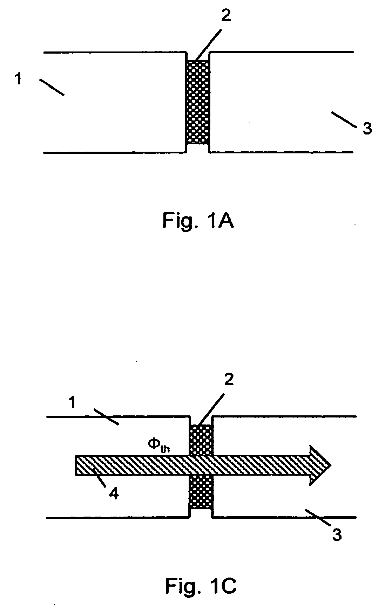

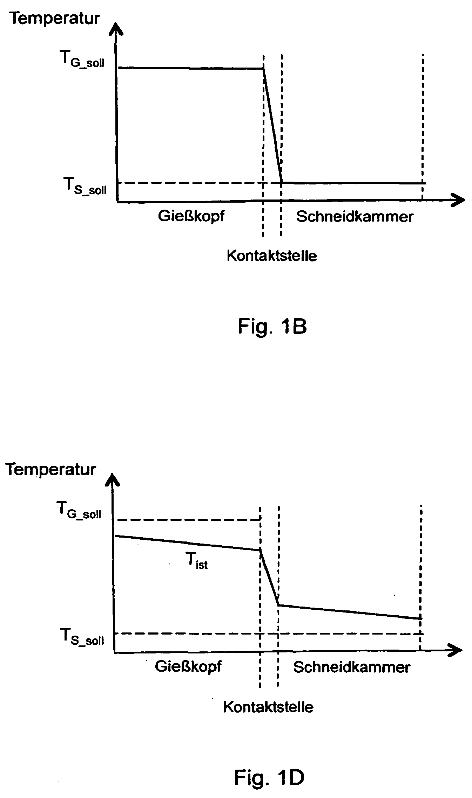

Diese Problematik soll zum besseren Verständnis mit Bezug auf die Fig. 1A bis 1D näher erläutert werden.

Die Fig. 1A zeigt schematisch ein Element eines Gießkopfs 1, das über eine Isolierung 2 in Kontakt steht mit einem Element eines Schneidkammergehäuses 3. Wie vorstehend erläutert, soll auf Seiten des Gießkopfes 1 eine hohe Temperatur herrschen, die als Solltemperatur des Gießkopfs $T_{G\_soll}$ bezeichnet werden soll. Das Schneidkammergehäuse 3 soll hingegen möglichst kalt sein. Entsprechend soll auf Seiten des Schneidkammergehäuses 3 eine wesentlich niedriger liegende Solltemperatur des Schneidkammergehäuses, $T_{S\_soll}$, herrschen.

Unter idealen Bedingungen wären der Gießkopf 1 und das Schneidkammergehäuse 3 an der Kontaktstelle durch die Isolierung 2 thermisch perfekt voneinander getrennt, so dass kein Wärmefluss auftritt. Unter diesen Idealbedingungen, die einer idealen Isolierung 2 mit einer Wärmeeindringzahl b von 0 entspricht, würde sich ein Temperaturverlauf ergeben, wie er in der Fig. 1B dargestellt ist: Der Gießkopf 1 würde bis zum Isolator 2 unverändert gleichbleibend die heiße Solltemperatur $T_{G\_soll}$ aufweisen, während das Schneidkammergehäuse 3 unverändert gleichbleibend die kalte Solltemperatur $T_{S\_soll}$ aufweist. Eine Temperaturänderung würde sich allein auf den Bereich der Isolation 2 beschränken.

Wie bereits erwähnt, kann dieses Ideal oftmals nicht bzw. nicht hinreichend erreicht werden und es verbleibt ein Rest an Wärmeeintrag, wie in der Fig. 1C als Wärmefluss $\Phi_{th}$ 4 dargestellt. Dieser Wärmefluss $\Phi_{th}$ 4 führt dazu, dass dem Gießkopf 1 Wärme entzogen wird und der Gießkopf zur Kontaktstelle hin zunehmend auskühlt. Die Gießkopf-Solltemperatur $T_{G\_soll}$ wird unterschritten. Auf Seiten des Schneidkammergehäuses 3 stellt sich auf Grund des Wärmeeintrags die Umgekehrte Situation ein: Das Schneidkammergehäuse 3 wird lokal erwärmt und die Schneidkammergehäuse-Solltemperatur $T_{S\_soll}$ wird überschritten.

Es ist daher eine Aufgabe der vorliegenden Erfindung, eine Granuliervorrichtung anzugeben, welche die vorgenannten Nachteile überwindet.

Es ist eine weitere Aufgebe der Erfindung, eine Granuliervorrichtung anzugeben, in welcher eine thermische Beeinflussung des Schneidkammergehäuses durch den Gießkopf und/oder umgekehrt effektiv verhindert oder zumindest deren Auswirkung verringert wird.

Diese und andere Aufgaben der Erfindung werden durch eine Granuliervorrichtung mit den Merkmalen des Anspruchs 1 gelöst.

Weitere bevorzugte Ausführungsformen sind in den abhängigen Ansprüchen dargelegt.

In einem Aspekt betrifft die vorliegende Erfindung eine Granuliervorrichtung zum Granulieren thermoplastischer Materialien, mit einem Gießkopf, einem Schneidkammergehäuse, und zumindest einer Isolierung aus thermisch isolierendem Material, welche zwischen einem Gießkopfelement und einem Schneidkammergehäuseelement angeordnet ist, wobei ferner zumindest eine Temperiereinrichtung vorgesehen ist, die zwischen der Isolierung und dem Schneidkammergehäuseelement oder in dem Schneidkammergehäuseelement in einem Bereich benachbart der Isolierung angeordnet ist.

Die Temperiereinrichtung kann als Kühleinrichtung oder als Heizeinrichtung arbeiten.

Indem eine Temperiereinrichtung in Form einer Kühleinrichtung direkt an oder in unmittelbarer Nähe der Isolierung angeordnet wird, welche den Gießkopf und die Schneidkammer thermisch voneinander isolieren soll, kann erreicht werden, dass die unvermeidbarer Weise vom vorangeschalteten Gießkopf eingestreute Wärme an der Stelle des Eintrags in das kalt zu haltende Gehäuse der Schneidkammer aufgenommen und abtransportiert wird.

Damit wird die den Wärmeeintrag durch einen hohen Wärmeflusswiderstand minimierende passive Isolierwirkung der Isolierung durch die aktive Wirkung der die überschüssige Wärme aufnehmenden und entfernenden Kühleinrichtung unterstützt.

In umgekehrter Weise kann eine Temperiereinrichtung in Form einer Heizeinrichtung einem Abfluss von Wärme entgegenwirken und so ein Auskühlen verhindern.

Die zumindest eine Temperiereinrichtung kann einen oder mehrere Kanäle aufweisen, welche dazu eingerichtet sind, von einem temperierten Wärmeträgerfluid durchströmt zu werden. Das Wärmeträgerfluid kann Wasser, ein Wärmeträgeröl, Luft oder ein Gas sein.

Alternativ oder ergänzend kann die zumindest eine Temperiereinrichtung ein elektrisches Peltierelement aufweisen.

Das Schneidkammergehäuseelement kann ein Anschlussflanschabschnitt des Schneidkammergehäuses sein. Dabei kann die zumindest eine Isolierung als ein Ring aus Isolationsmaterial ausgebildet sein, der auf einer ringförmigen Fläche des Anschlussflanschabschnitts ausgebildet ist, um den Anschlussflanschabschnitt zumindest teilweise thermisch zu isolieren gegenüber einem ringförmigen Spalt, der zwischen dem Anschlussflanschabschnitt und einer Gießkopfeinrichtung ausgebildet ist.

Der Gießkopf kann eine Düsenplatte, eine Einrichtung zum Zuführen von Schmelzematerial zur Düsenplatte und einen Spannring aufweisen, welcher die Düsenplatte an der Einrichtung befestigt, wobei der Spannring in dem ringförmigen Spalt angeordnet ist.

Der Anschlussflanschabschnitt kann an einen Flansch der Einrichtung befestigt sein.

Alternativ oder ergänzend kann die zumindest eine Isolierung zwischen dem Anschlussflanschabschnitt und dem Flansch der Einrichtung angeordnet sein.

Die Temperiereinrichtung ist bevorzugt in dem Anschlussflanschabschnitt als zumindest ein ringförmiger Kanal oder als zumindest eine ringförmige Nut ausgebildet, welcher bzw. welche an eine Seite der Isolierung angrenzen.

Vorzugsweise ist die zumindest eine Temperiereinrichtung eingerichtet, als Kühleinrichtung zu arbeiten, um Wärmeenergie, welche auf Grund eines Wärmeflusses durch die Isolierung in das Schneidkammergehäuseelement eingetragen wird, aufzunehmen und abzuführen, so dass eine Erwärmung des Schneidkammergehäuseelements auf Grund der eingetragenen Wärme verhindert oder reduziert wird. Die Kühleinrichtung kann dabei insbesondere so gesteuert werden, dass in dem Schneidkammergehäuseelement eine Solltemperatur aufrecht erhalten wird.

Die Granuliervorrichtung kann eine Granuliervorrichtung nach dem Trockenheißabschlagverfahren oder nach dem Unterwassergranulationsverfahren sein.

Bevorzugt ist die Granuliervorrichtung eingerichtet, ein pharmazeutisches Material zu granulieren.

Die Erfindung wird im Folgenden anhand bevorzugter Ausführungsformen beschrieben werden, mit Bezug auf die Zeichnungen:

Fig. 1A      zeigt eine Kontaktstelle zwischen einem Gießkopf und einem Schneidkammergehäuse unter Annahme von Idealbedingungen;

Fig. 1B      zeigt einen Temperaturverlauf für die Kontaktstelle der Fig. 1A;

Fig. 1C      zeigt eine Kontaktstelle zwischen einem Gießkopf und einem Schneidkammergehäuse nach dem Stand der Technik;

Fig. 1D      zeigt einen Temperaturverlauf für die Kontaktstelle der Fig. 1C;

Fig. 2A      zeigt eine Kontaktstelle zwischen einem Gießkopf und einem Schneidkammergehäuse gemäß einer ersten Ausführungsform;

Fig. 2B      zeigt einen Temperaturverlauf für die Kontaktstelle der Fig. 2A;

Fig. 3A      zeigt eine Kontaktstelle zwischen einem Gießkopf und einem Schneidkammergehäuse gemäß einer zweiten Ausführungsform;

Fig. 3B      zeigt einen Temperaturverlauf für die Kontaktstelle der Fig. 3A; und

Fig. 4      zeigt eine Granuliervorrichtung gemäß einer Ausführungsform der Erfindung.

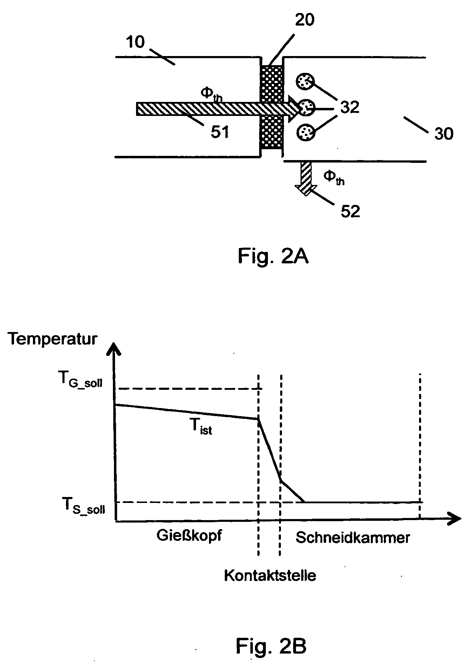

Die Fig. 2A zeigt eine erste Ausführungsform der Erfindung. In der Fig. 2A ist schematisch ein Element eines Gießkopfs 10 dargestellt, das über eine Isolierung 20 mit einem Element eines Schneidkammergehäuses 30 in Kontakt steht.

Bei den jeweiligen Elementen kann es sich beispielsweise um umlaufende, kreisförmige Befestigungsflansche handeln, mittels derer das Schneidkammergehäuse und der Gießkopf mechanisch miteinander befestigt sind. Auf Seiten des Gießkopfs kann es sich auch um eine Düsenplatte, einen Spannring für die Düsenplatte, oder ein anderes Element des Gießkopfs handeln. Ebenso kann es sich auf Seiten des Schneidkammergehäuses um andere Elemente, wie einer Schneidkammerwand handeln.

Hierbei soll eine Stelle, an der ein Element des Gießkopfs mit einem Element des Schneidkammergehäuses in Verbindung steht, sei es in direktem Kontakt oder sei es durch eine Isolierung aus einem thermisch isolierenden Material teilweise oder vollständig getrennt, als Kontaktstelle bezeichnet werden.

In der in Fig. 2A dargestellten Kontaktstelle der ersten Ausführungsform ist auf Seiten der Schneidkammer 30 eine Temperiereinrichtung 32 vorgesehen, bei der es sich wie in der Fig. 2A dargestellt um einen oder mehrere Kanäle 32 für ein temperiertes Wärmeträgerfluid handeln kann. Als Wärmeträgerfluid kann Wasser, Wärmeträgeröl, oder ein Gas verwendet werden. Die Kanäle 32 sind in dem Schneidkammerelement 30 in einem Bereich benachbart der Isolierung 20 angeordnet. Die aus den Kanälen 32 gebildete Temperiereinrichtung kann als Kühleinrichtung verwendet werden, wobei das Wärmeträgerfluid auf eine niedrige Temperatur, vorzugsweise im Wesentlichen auf die Solltemperatur $T_{S\_soll}$ des Schneidkammergehäuses 30 temperiert wird.

Die Temperiereinrichtung 32 kann auf diese Weise als Senke für die überschüssige Wärme dienen, welche durch den Wärmefluss 51 aus dem Gießkopf 10 durch die nicht ideal thermisch isolierende Isolierung 20 in das Schneidkammergehäuse 30 eingetragen wird. Die überschüssige Wärme wird durch das Wärmeträgerfluid in den Kanälen 32 aufgenommen und nach außen abgeführt, wie durch den Wärmeflusspfeil 52 versinnbildlicht. Die überschüssige Wärme kann daher nicht über die Kanäle 32 hinaus in das Schneidkammergehäuse 30 eindringen und der (aus Sicht der Isolierung 20 betrachtet) hinter den Kanälen 32 liegende Abschnitt des Schneidkammergehäuses 30 erfährt keinen Wärmeeintrag und es findet in diesem Abschnitt daher keine Erwärmung über die Solltemperatur statt. Es stellt sich somit ein Temperaturverlauf ein, wie in der Fig. 2B schematisch dargestellt.

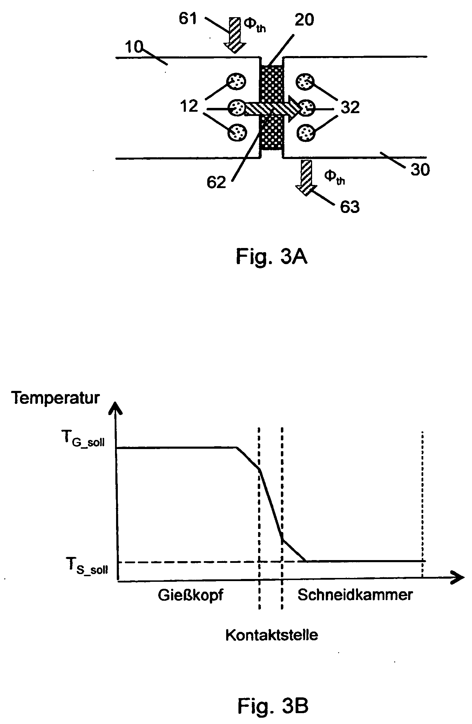

In einer weiteren Ausführungsform ist, wie in der Fig. 3A dargestellt, auch auf Seiten des Gießkopfes eine Temperiereinrichtung 12 ausgebildet. Die Temperiereinrichtung 12 kann ebenfalls in Form eines oder mehrerer Kanäle 32 für ein temperiertes Wärmeträgerfluid ausgebildet sein, die in der Nähe der Isolierung 20 angeordnet sind. Die Temperiereinrichtung 12 kann hierbei als Heizung verwendet werden, wobei das Wärmeträgerfluid auf eine hohe Temperatur, vorzugsweise im Wesentlichen auf die Solltemperatur $T_{G\_soll}$ des Gießkopfs temperiert wird. Die Temperiereinrichtung 12 kann hierbei als Quelle für Wärme dienen, die in das Gießkopfelement 10 eingebracht wird, wie durch den Wärmefluss 61 dargestellt. Vorzugsweise trägt der Wärmefluss 61 die Menge an Wärme ein, die als Wärmefluss 62 durch die Isolierung 20 in das Schneidkammerelement 30 eingetragen und mittels der Kanäle 32 als Wärmefluss 63 nach außen abgeführt wird. Der Wärmefluss 61 führt daher dem Gießkopfelement 10 wieder die Wärmemenge zu, die diesem durch die Isolierung 20 auf Grund des Wärmeflusses 62 entzogen wird. In der Summe erfolgt daher kein Abfluss von Wärme aus dem Gießkopfelement 10, so dass das Gießkopfelement 10 nicht lokal auskühlt. Dies ist in dem Temperaturverlauf der Fig. 3B schematisch dargestellt.

Wie der in Fig. 3B dargestellte Temperaturverlauf zeigt, kann durch die Verwendung von zwei Temperiereinrichtungen, wobei eine Temperiereinrichtung in dem Gießkopfelement 10 und die andere Temperiereinrichtung in dem Schneidkopfgehäuseelement 30 jeweils in einem Bereich angrenzend oder benachbart der Isolierung 20 angeordnet sind, eine gute Annäherung an den in Fig. 1B gezeigten idealisierten Temperaturverlauf erreicht werden

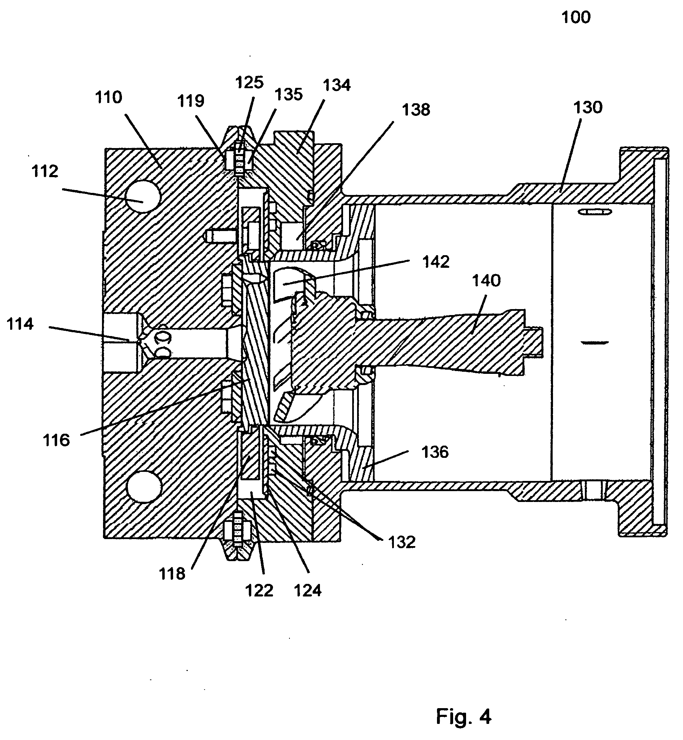

Die Fig. 4 stellt eine Granuliervorrichtung 100 gemäß einer bevorzugten Ausführungsform der vorliegenden Erfindung dar. Bei der Granuliervorrichtung 100 kann es sich insbesondere um eine Granuliervorrichtung nach dem Trockenheißabschlag-Prinzip handeln, insbesondere zur Granulierung von pharmazeutischen Materialien.

Die Granuliervorrichtung 100 weist einen Gießkopf mit einer Düsenplatte 116 und einer der Düsenplatte 116 in Stromflussrichtung vorgelagerten Einrichtung 110 auf. In der Einrichtung 110 ist ein Durchlass 114 ausgebildet, um Schmelzematerial zu der Düsenplatte 116 zu leiten. Bei der Einrichtung 110 kann es sich um eine Zugankerplatte, einen Schmelzeverteiler, eine Anschlussplatte oder eine andere Einrichtung handeln, wie sie dem Fachmann für die Zuleitung von Schmelzematerial zu einer Düsenplatte einer Granulationsvorrichtung bekannt sind.

In der Einrichtung 110 ist eine Heizeinrichtung vorgesehen, die in Form eines Ringkanals 112 für eine fluide Konvektionsheizung ausgebildet ist. Alternativ kann auch ein elektrisches Heizelement vorgesehen sein, das in oder an der Einrichtung 110 angeordnet ist. Die Heizeinrichtung dient dazu, die Einrichtung 110 und die Düsenplatte 116 aufzuheizen auf eine Temperatur $T_{G\_soll}$, welche das Schmelzematerial in dem notwendigen schmelzflüssigen Zustand hält.

Die Granuliervorrichtung der Fig. 4 weist weiter eine Schneidkammer auf, innerhalb derer ein Messerkopf 140 mit zumindest einem Messer 142 angeordnet ist, welches im Betrieb die in der Düsenplatte 116 ausgebildeten Düsenöffnungen überstreicht, um die durch die Öffnungen austretenden Materialstränge abzutrennen, so dass Granulatkörner gebildet werden.

Die Schneidkammer wird durch ein Schneidkammergehäuse definiert. Das Schneidkammergehäuse kann einteilig oder mehrteilig ausgeführt sein. In der in Fig. 4 dargestellten Ausführungsform wird das Schneidkammergehäuse durch ein Schneidkammerhauptgehäuse 130 und einen damit verbundenen Anschlussflanschabschnitt 134 gebildet. Der Anschlussflanschabschnitt 134 dient zur mechanischen Befestigung des Schneidkammergehäuses an eine entsprechende Flanschfläche der Einrichtung 110.

In der Schneidkammer ist eine Spalthülse 136 angeordnet. Die Spalthülse 136 kann versetzt werden, um einen Spalt freizugeben, aus dem ein Prozessfluid aus einem Prozessfluidkanal 138 in die Schneidkammer eintreten kann.

Wie in der Fig. 4 dargestellt, kann die Düsenplatte 116 mittels eines Spannrings 118 an die Einrichtung 110 befestigt sein. Der Spannring 118 kann dabei innerhalb eines ringförmigen Spalts 122 angeordnet sein, der zwischen der Einrichtung 110 und dem Anschlussflanschabschnitt 134 ausgebildet ist. Eine ringförmige Isolierung 124 aus thermisch isolierendem Material ist auf dem Anschlussflanschabschnitt 134 angeordnet, um zumindest einen Teil der dem Spalt 122 zugewandten Fläche des Anschlussflanschabschnittes 134 gegenüber dem Spalt 122, und damit gegenüber der in dem Spalt herrschenden Hitze, die von der heißen Einrichtung 110 und/oder der Düsenplatte 116 in den Spalt 122 eingetragen wird, thermisch zu isolieren.

In dem Anschlussflanschabschnitt 134 sind zwei nutenförmige, ringförmige Kanäle 132 ausgebildet, welche an die Isolierung 124 angrenzen. Die nutenförmigen Kanäle 132 dienen dazu, ein Wärmeträgerfluid zu führen und als Temperiereinrichtung zu arbeiten. Insbesondere dienen die Kanäle 132 dazu, als Kühleinrichtung zu arbeiten, um die Wärmeenergie, welche durch die Isolierung 124 hindurch tritt, aufzunehmen und abzuleiten, um eine Erwärmung des Anschlussflanschabschnitts zu vermeiden, wie vorstehend mit Bezug auf die Temperiereinrichtungen 32 der Fig. 2A bis 3B erläutert.

Alternativ oder ergänzend kann eine Isolierung 125 vorgesehen sein, die zwischen den Flanschen des Anschlussflanschabschnitts 134 und der Einrichtung 110 eingesetzt ist. Angrenzend der Isolierung 125 können ringförmige, nutenförmige Kanäle 119 und 135 in der Einrichtung 110 bzw. dem Anschlussflanschabschnitt 134 ausgebildet sein. Der Kanal 119 kann dabei als eine Heizung arbeiten und als Quelle von Wärme dienen, während der Kanal 135 als Kühlung arbeiten und als Wärmesenke dienen kann, wie vorstehend mit Bezug auf die Fig. 3A und 3B beschrieben.

Auf diese Weise können die ringförmigen Kanäle 132 und/oder 135 dazu dienen, dass Wärmeenergie, welche auf Grund des herrschenden Temperaturgefälles zwischen dem Düsenkopf und dem Schneidkammergehäuse, insbesondere zwischen der Einheit 110, der Düsenplatte 116 und/oder dem Spannring 118 einerseits und dem Anschlussflanschabschnitt 134 andererseits, durch die im Flanschbereich angeordnete Isolierung 125 und/oder durch den Spalt 122 und die Isolierung 124 in den Anschlussflanschabschnitt 134 eingetragen wird, durch die als Kühlung arbeitenden ringförmigen Kanäle 135 und/oder 132 abgeführt wird. Es wird auf diese Weise verhindert, dass der Anschlussflanschabschnitt 134 sich unerwünscht erwärmt. Der Anschlussflanschabschnitt 134 kann auf diese Weise effektiv auf einer für den Anschlussflanschabschnitt 134 gewünschten Solltemperatur $T_{S\_soll}$ gehalten werden.

Mit der Vermeidung einer unerwünschten Erwärmung des Anschlussflanschabschnitts 134 kann auch verhindert werden, dass der (unerwünscht erwärmte) Anschlussflanschabschnitt 134 wiederum das in dem Prozessfluidkanal 138 geführte Prozessfluid beeinflusst und unerwünscht erwärmt.

Während im Vorstehenden die Temperiereinrichtungen in Form von Wärmeträgerfluid führenden Kanälen beschrieben wurden, können auch andere Ausgestaltungen verwendet werden.

So können die Temperiereinrichtungen beispielsweise als elektrische Peltierelemente ausgeführt werden, deren eine Seite die Isolierung kontaktiert und deren andere Seite in Kontakt steht mit einer Fläche des Gießkopfelements oder des Schneidkammerelements. Die Peltierelemente werden dabei so betrieben, dass die eine Seite erhitzt und die andere Seite abgekühlt werden, um so einen Wärmefluss durch das Peltierelement zu erzeugen, der entgegengesetzt dem Wärmefluss durch die Isolierung ist.

Für Temperiereinrichtungen, die als Wärmequelle dienen sollen, können auch elektrische Heizelemente wie Widerstandsheizungen, Heizwendel oder ähnliches verwendet werden.


## Patentansprüche

1. Granuliervorrichtung (100) zum Granulieren thermoplastischer Materialien,
   mit einem Gießkopf;
   einem Schneidkammergehäuse; und
   zumindest einer Isolierung (20; 124, 125) aus thermisch isolierendem Material, welche zwischen einem Gießkopfelement (10; 110) und einem Schneidkammergehäuseelement (30; 134) angeordnet ist,
   **dadurch gekennzeichnet, dass**
   zumindest eine Temperiereinrichtung (32; 132, 135) vorgesehen ist, die zwischen der Isolierung (20; 124, 125) und dem Schneidkammergehäuseelement (30; 134) oder in dem Schneidkammergehäuseelement (30; 134) in einem Bereich benachbart der Isolierung (10; 124, 125) angeordnet ist.

2. Granuliervorrichtung (100) nach Anspruch 1, **dadurch gekennzeichnet, dass** die Temperiereinrichtung (32; 132, 135) einen oder mehrere Kanäle aufweist, welche dazu eingerichtet sind, von einem temperierten Wärmeträgerfluid durchströmt zu werden.

3. Granuliervorrichtung (100) nach Anspruch 2, **dadurch gekennzeichnet, dass** das Wärmeträgerfluid Wasser, ein Wärmeträgeröl, Luft oder ein Gas ist.

4. Granuliervorrichtung (100) nach Anspruch 1, **dadurch gekennzeichnet, dass** die Temperiereinrichtung (32; 132, 135) zumindest ein elektrisches Peltierelement umfasst.

5. Granuliervorrichtung (100) nach einem der Ansprüche 1 bis 4, **dadurch gekennzeichnet, dass** das Schneidkammergehäuseelement ein Anschlussflanschabschnitt (134) des Schneidkammergehäuses ist.

6. Granuliervorrichtung (100) nach Anspruch 5, **dadurch gekennzeichnet, dass** die zumindest eine Isolierung als ein Ring (124) aus Isolationsmaterial ausgebildet ist, der auf einer ringförmigen Fläche des Anschlussflanschabschnitts (134) ausgebildet ist, um den Anschlussflanschabschnitt (134) zumindest teilweise thermisch zu isolieren gegenüber einem ringförmigen Spalt (122), der zwischen dem Anschlussflanschabschnitt (134) und einer Gießkopfeinrichtung (110) ausgebildet ist.

7. Granuliervorrichtung (100) nach Anspruch 6, **dadurch gekennzeichnet, dass** der Gießkopf eine Düsenplatte (116), eine Einrichtung (110) zum Zuführen von Schmelzematerial zur Düsenplatte (116) und einen Spannring (118) aufweist, der die Düsenplatte (116) an der Einrichtung (110) befestigt, wobei der Spannring (118) in dem ringförmigen Spalt (122) angeordnet ist.

8. Granuliervorrichtung (100) nach einem der Ansprüche 5 bis 7, **dadurch gekennzeichnet, dass** der Anschlussflanschabschnitt (134) an einen Flansch der Einrichtung (110) befestigt ist.

9. Granuliervorrichtung (100) nach Anspruch 8, **dadurch gekennzeichnet, dass** die zumindest eine Isolierung (125) zwischen dem Anschlussflanschabschnitt (134) und dem Flansch der Einrichtung (110) angeordnet ist.

10. Granuliervorrichtung (100) nach einem der Ansprüche 5 bis 9, **dadurch gekennzeichnet, dass** die Temperiereinrichtung in dem Anschlussflanschabschnitt (134) als zumindest ein ringförmiger Kanal oder Nut (132, 135) ausgebildet ist, welcher an eine Seite der zumindest einen Isolierung (124, 125) angrenzt.

11. Granuliervorrichtung (100) nach einem der Ansprüche 1 bis 10, **dadurch gekennzeichnet, dass** die zumindest eine Temperiereinrichtung eingerichtet ist, als Kühleinrichtung zu arbeiten, um Wärmeenergie, welche auf Grund eines Wärmeflusses durch die Isolierung (20; 124, 125) in das Schneidkammergehäuseelement (30; 134) eingetragen wird, aufzunehmen und abzuführen, so dass eine Erwärmung des Schneidkammergehäuseelements (30; 134) auf Grund der eingetragenen Wärme verhindert oder reduziert wird.

12. Granuliervorrichtung (100) nach Anspruch 11, **dadurch gekennzeichnet, dass** die Kühleinrichtung so gesteuert wird, dass in dem Schneidkammergehäuselement (30; 134) eine Solltemperatur (Ts_soll) aufrecht erhalten wird.

13. Granuliervorrichtung (100) nach einem der Ansprüche 1 bis 12, **dadurch gekennzeichnet, dass** die Granuliervorrichtung (100) eine Granuliervorrichtung nach dem Trockenheißabschlagverfahren ist.

14. Granuliervorrichtung (100) nach einem der Ansprüche 1 bis 12, **dadurch gekennzeichnet, dass** die Granuliervorrichtung (100) eine Granuliervorrichtung nach dem Unterwassergranulationsverfahren ist.

15. Granuliervorrichtung (100) nach einem der Ansprüche 1 bis 14, **dadurch gekennzeichnet, dass** das thermoplastische Material ein pharmazeutisches Material ist.

**Claims**

1. Granulating device (100) for granulating thermoplastic materials,
   having a die head;
   a cutting chamber housing; and
   at least one insulator (20; 124, 125), made of thermally insulating material, that is arranged between a die head element (10; 110) and a cutting chamber housing element (30; 134),
   **characterized in that**
   at least one temperature-control device (32; 132, 135) is provided that is located between the insulator (20; 124, 125) and the cutting chamber housing element (30; 134), or in the cutting chamber housing element (30; 134) in a region adjacent to the insulator (20; 124, 125).

2. Granulating device (100) according to claim 1, **characterized in that** the temperature-control device (32; 132, 135) has one or more conduits that are designed to allow a temperature-controlled heat transfer fluid to flow through.

3. Granulating device (100) according to claim 2, **char-**

**acterized in that** the heat transfer fluid is water, a heat transfer oil, air, or a gas.

4. Granulating device (100) according to claim 1, **characterized in that** the temperature-control device (32; 132, 135) includes at least one electrical Peltier element.

5. Granulating device (100) according to any one of claims 1 to 4, **characterized in that** the cutting chamber housing element is a connecting flange section (134) of the cutting chamber housing.

6. Granulating device (100) according to claim 5, **characterized in that** the at least one insulator is implemented as a ring (124) made of insulating material that is implemented on an annular surface of the connecting flange section (134) in order to at least partially thermally insulate the connecting flange section (134) from an annular gap (122) between the connecting flange section (134) and a die head apparatus (110).

7. Granulating device (100) according to claim 6, **characterized in that** the die head has a nozzle plate (116), an apparatus (110) for conveying melt material to the nozzle plate (116), and a locking ring (118) that fastens the nozzle plate (116) to the apparatus (110), wherein the locking ring (118) is located in the annular gap (122).

8. Granulating device (100) according to any one claims 5 to 7, **characterized in that** the connecting flange section (134) is fastened to a flange of the apparatus (110).

9. Granulating device (100) according to claim 8, **characterized in that** the at least one insulator (125) is located between the connecting flange section (134) and the flange of the apparatus (110).

10. Granulating device (100) according to any one of claims 5 to 9, **characterized in that** the temperature-control device in the connecting flange section (134) is designed as at least one annular conduit or groove (132, 135) adjoining one side of the at least one insulator (124, 125).

11. Granulating device (100) according to any one of claims 1 to 10, **characterized in that** the at least one temperature-control device is designed to function as a cooling unit in order to absorb and dissipate thermal energy that is introduced into the cutting chamber housing element (30; 134) as a result of a heat flow through the insulator (20; 124, 125), so that a rise in temperature of the cutting chamber housing element (30; 134) due to the introduced heat is prevented or reduced.

**12.** Granulating device (100) according to claim 11, **characterized in that** the cooling unit is controlled such that a setpoint temperature (Ts_soll) is maintained in the cutting chamber housing element (30; 134).

**13.** Granulating device (100) according to any one of claims 1 to 12, **characterized in that** the granulating device (100) is a granulating device that uses the air-cooled hot die-face pelletizing method.

**14.** Granulating device (100) according to any one of claims 1 to 12, **characterized in that** the granulating device (100) is a granulating device that uses the underwater granulating method.

**15.** Granulating device (100) according to any one of claims 1 to 14, **characterized in that** the thermoplastic material is a pharmaceutical material.

**Revendications**

**1.** Dispositif de granulation (100) pour granuler des matériaux thermoplastiques, comportant une tête de coulée ;
un boîtier pour chambre de coupe ; et
au moins une isolation (20; 124; 125) en matériau thermo-isolant disposée entre un élément de tête de coulée (10; 110) et un élément de boîtier de chambre de coupe (30; 134)
**caractérisé en ce que**
au moins un dispositif de thermorégulation (32; 132; 135) est prévu disposé entre l'isolation (20; 124; 125) et l'élément de boîtier de chambre de coupe (30; 134) ou dans un élément de boîtier de chambre de coupe (30;134) dans une zone proche de l'isolation (20; 124; 125).

**2.** Dispositif de granulation (100) selon la revendication 1, **caractérisé en ce que** le dispositif de thermorégulation (32; 132; 135) présente un ou plusieurs canaux, destinés à être traversés par un fluide caloporteur.

**3.** Dispositif de granulation (100) selon la revendication 2, **caractérisé en ce que** le fluide caloporteur est de l'eau, une huile caloporteuse, de l'air ou un gaz.

**4.** Dispositif de granulation (100) selon la revendication 1, **caractérisé en ce que** le dispositif de thermorégulation (32; 132; 135) comprend au moins un élément électrique Peltier.

**5.** Dispositif de granulation (100) selon une des revendications 1 à 4, **caractérisé en ce que** l'élément de boîtier de chambre de coupe est une portion de bride de raccord (134) du boitier de chambre de coupe.

**6.** Dispositif de granulation (100) selon la revendication 5, **caractérisé en ce que** la au moins une isolation a la forme d'une bague (124) en matériau isolant formée sur la surface annulaire de la portion de bride de raccord (134) pour isoler au moins partiellement la portion de bride de raccord (134) vis-à-vis d'une fente annulaire (122) formée entre la portion de bride de raccord (134) et une tête de coulée (110).

**7.** Dispositif de granulation (100) selon la revendication 6, **caractérisé en ce que** la tête de coulée présente une plaque d'ajutage (116), un dispositif (110) pour amener la masse fondue jusqu'à la plaque d'ajutage (116) et un collier de serrage (118) fixant la plaque d'ajutage (116) sur le dispositif (110), le collier de serrage (118) se trouvant dans la fente annulaire (122).

**8.** Dispositif de granulation (100) selon une des revendications 5 à 7, **caractérisé en ce que** la portion de bride de raccord (134) est fixée sur une bride du dispositif (110).

**9.** Dispositif de granulation (100) selon la revendication 8, **caractérisé en ce que** au moins une isolation (125) est agencée entre la portion de bride de raccord (134) et la bride du dispositif (110).

**10.** Dispositif de granulation (100) selon les revendications 5 à 9, **caractérisé en ce que** le dispositif de thermorégulation dans la portion de bride de raccord (134) est configuré comme un canal annulaire ou une rainure (132; 135), adjacent sur un côté de la au moins une isolation (124; 125).

**11.** Dispositif de granulation (100) selon les revendications 1 à 10, **caractérisé en ce que** le au moins un dispositif de thermorégulation est conçu pour fonctionner comme dispositif réfrigérant, pour absorber et évacuer l'énergie thermique qui en raison d'un flux de chaleur à travers l'isolation (20; 124; 125) est apportée dans l'élément de boitier de chambre de coupe (30; 134), de sorte que le réchauffement de l'élément de boitier de chambre de coupe (30; 134), en raison de la chaleur absorbée est évité ou réduit.

**12.** Dispositif de granulation (100) selon la revendications 11 **caractérisé en ce que** le dispositif réfrigérant est contrôlé de sorte qu'une température de consigne (Tc_consigne) est maintenue dans l'élément de boitier de chambre de coupe (30; 134).

**13.** Dispositif de granulation (100) selon une des revendications 1 à 12, **caractérisé en ce que** le dispositif de granulation (100) est un dispositif de granulation selon le procédé de découpage à chaud et à sec.

**14.** Dispositif de granulation (100) selon une des revendications 1 à 12, **caractérisé en ce que** le dispositif de granulation (100) est un dispositif de granulation selon le procédé de granulation immergé.

**15.** Dispositif de granulation (100) selon une des revendications 1 à 14, caractérisé en ce - que le matériau thermoplastique est un matériau pharmaceutique.

2

1

3

Fig. 1A

2

1

$\Phi_{th}$

4

3

Fig. 1C

Temperatur

$T_{G\_soll}$

$T_{S\_soll}$

Gießkopf          Schneidkammer

Kontaktstelle

Fig. 1B

Temperatur

$T_{G\_soll}$

$T_{ist}$

$T_{S\_soll}$

Gießkopf          Schneidkammer

Kontaktstelle

Fig. 1D

20

10

$\Phi_{th}$

51

32

30

$\Phi_{th}$

52

## Fig. 2A

Temperatur

$T_{G\_soll}$

$T_{ist}$

$T_{S\_soll}$

Gießkopf

Schneidkammer

Kontaktstelle

## Fig. 2B

Fig. 3A

Fig. 3B

100

Fig. 4

**EP 2 861 397 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03031132 A
- US 4019414 A
- DE 10344793 A1